# EUROPÄISCHE PATENTSCHRIFT

(11) **EP 2 595 771 B1**
(45) Veröffentlichungstag und Bekanntmachung des Hinweises auf die Patenterteilung: **14.09.2016**
(21) Anmeldenummer: 11743436.5
(22) Anmeldetag: 18.07.2011
(51) Int. Cl.: B21K 1/18, F02F 3/00

(54) **VERFAHREN ZUR HERSTELLUNG EINES KÜHLKANALKOLBENS FÜR BRENNKRAFTMASCHINEN UND DERART HERGESTELLTER KOLBEN**
METHOD FOR PRODUCING A COOLING CHANNEL SYSTEM FOR INTERNAL COMBUSTION ENGINES AND PISTON PRODUCED IN THIS WAY
PROCÉDÉ DE FABRICATION D'UN PISTON À CANAL DE REFROIDISSEMENT POUR MOTEURS À COMBUSTION INTERNE ET PISTON AINSI FABRIQUÉ

(30) Priorität: 19.07.2010 DE 102010027552
(43) Veröffentlichungstag der Anmeldung: 29.05.2013
(73) Patentinhaber: KS Kolbenschmidt GmbH, 74172 Neckarsulm (DE)
(72) Erfinder: GNIESMER, Volker, 31061 Alfeld (DE)
(74) Vertreter: Greif, Thomas
(86) Internationale Anmeldenummer: PCT/EP2011/003583
(87) Internationale Veröffentlichungsnummer: WO 2012/010285

(56) Entgegenhaltungen:
- EP-A1- 1 611 975
- EP-A2- 1 614 885

## Beschreibung

Die Erfindung betrifft ein Verfahren zur Herstellung eines Kolbens gemäß den Merkmalen des Oberbegriffes des Patentanspruches 1.

Aus der DE 10 2004 031 513 A1 ist ein Verfahren zur Herstellung eines Kühlkanalkolbens für eine Brennkraftmaschine bekannt, der in seinem Kolbenboden einen Kühlkanal aufweist, wobei sich dem Kolbenboden ein Kolbenunterteil mit Kolbennaben, Bolzenbohrungen und Kolbenschäften anschließt, wobei zunächst ein Kolbenrohling mit einem im Bereich des Kolbenbodens radial abstehenden und umlaufenden Kragen hergestellt und der eine spätere Ringfeldwand bildende Kragen anschließend umgeformt wird, wobei weiterhin in einem Übergangsbereich zwischen dem Kolbenboden und dem Kolbenunterteil ein Anlagebereich für den Kragen geformt und der Kragen derart umgeformt wird, bis die Innenfläche dessen äußerer radial umlaufender Kante sehr nah oder vollständig zur Anlage an den Anlagebereich kommt, um somit einen geschlossenen Kühlkanal zu bilden. Auf den Offenbarungsgehalt dieser veröffentlichten Patentanmeldung DE 10 2004 031 513 A1 wird hiermit voll inhaltlich Bezug genommen.

Die EP 1 614 885 A2 offenbart einen einteiligen Stahlkolben. Nach dem Umformprozess zur Bildung eines Kühlkanales kommt der umlaufende Kragen hier vollumfänglich zur Anlage an den entsprechenden Anlagebereichen. Die Bildung eines definierten Spaltes ist hier nicht vorgesehen.

In der EP 1 611 975 A1 wird ein Verfahren zur Herstellung eines Kühlkanalkolbens für eine Brennkraftmaschine offenbart. Hierbei ist vorgesehen, dass in einem Übergangsbereich zwischen dem Kolbenboden und dem Kolbenunterteil ein Anlagebereich für den Kragen geformt wird und der Kragen derart umgeformt wird, bis dessen äußere radial umlaufende Kante sehr nah oder vollständig zur Anlage an den Anlagebereich kommt, um einen geschlossenen Kühlkanal zu bilden. Die Schaffung eines definierten Spaltes zu der Oberkante des Kolbenschaftes ist auch hier nicht vorgesehen.

Kolben für Brennkraftmaschinen unterliegen im Betrieb hohen Massekräften. Das Bauteilgewicht spielt dabei bei modernen Brennkraftmaschinen eine immer wichtiger werdende Rolle. Zum Beispiel geht es um die Reduzierung von Triebwerkskräften, der Reibungsreduzierung etc.. Insbesondere im Ringfeldbereich, d. h. im Bereich einer Ringfeldwand, unterliegt der Kühlkanalkolben hohen Anforderungen bzgl. Blowby und Ölverbrauch.

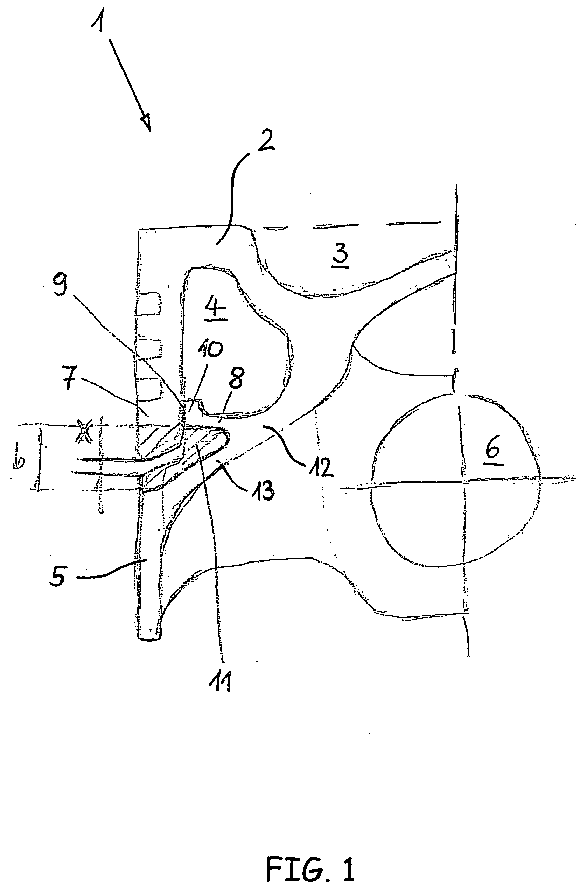

Bei dem gattungsgemäß bekannten Verfahren zur Herstellung eines Kühlkanalkolbens wird der Kragen, der mit Ringnuten versehen wird und damit später die Ringfeldwand bildet, umgeformt (umgeklappt), so dass das radial umlaufende Ende mit seiner Innenfläche an einem Anlagebereich des Kolbenrohlings sehr nah oder vollständig zur Anlage kommt. Bezüglich dieser Verfahrensschritte, die auch die Grundlage für die vorliegende Erfindung sind, wird auf die Figuren 1 bis 4 nebst zugehöriger Beschreibung der DE 10 2004 031 513 A1 verwiesen. Dabei kommt die Innenfläche der umlaufenden unteren Kante an der oberen umlaufenden Kante des Kolbenschaftes zur Anlage (der Begriff "untere" und "obere" ist dabei in Bezug auf die Kolbenoberachse zu sehen). Da es sich bei dem Kolbenrohling im Regelfall um einen Kolbenrohling handelt, der im Schmiedeverfahren hergestellt wird, ist dieser mit hohen Toleranzen behaftet. Dabei ist es nicht auszuschließen, dass bei dem Umformprozess die Ringfeldwand unerwünscht verformt, insbesondere gestaucht wird. Wird bei dem Umformprozess die Ringfeldwand gestaucht, insbesondere aufgestaucht, wird in nachteiliger Weise die hinter den Ringnuten verbleibende Wand unkontrollierbar verformt und so ein potenzieller negativer Einschlussfaktor auf die Ringfunktion erzielt. Das bedeutet, dass auf Grund der Verformung der Ringfeldwand nach deren Umformung die in den Ringnuten eingesetzten Ringe gar nicht oder nicht immer die erforderliche Funktion ausüben können. Obwohl dieser gattungsgemäße bekannte Kolben schon hinsichtlich seines Endgewichtes verbessert ist, besteht für den Einsatz solcher Kolben in modernen Brennkraftmaschinen immer noch das Erfordernis, das Gewicht zu senken.

Der Erfindung liegt daher die Aufgabe zu Grunde, ein Verfahren zur Herstellung eines Kühlkanalkolbens anzugeben, der nach seiner Herstellung während des Betriebes in dem Zylinderraum der Brennkraftmaschine in Bezug auf die Ringe keine Probleme bereitet und der weiter in seinem Gewicht reduziert ist.

Diese Aufgabe ist durch die Merkmale des Patentanspruches 1 gelöst.

Erfindungsgemäß ist vorgesehen, dass der Endbereich der Ringfeldwand nach dem Umformen einen definierten Spalt zu der Oberkante des Kolbenschaftes bildet. Das heißt, dass die Ringfeldwand (der ursprüngliche Kragen, der umgeformt wird und vor oder nach dem Umformen mit den Ringnuten versehen wird) einen definierten Spalt bildet. Durch diesen Spalt wird vermieden, dass während und/oder nach dem Umformen die Ringfeldwand gestaucht, insbesondere aufgestaucht, wird. Die Ringfeldwand kann somit frei verformt werden und damit bleiben Toleranzen des Kolbenrohlings unberücksichtigt. Durch die Unterbindung des Stauchens (Aufstauchens) des Ringfeldes bzw. der Ringfeldwand wird in vorteilhafter Weise vermieden, dass die hinter den Ringnuten verbleibende Wand unkontrollierbar verformt wird und sich so ein potenzieller negativer Einflussfaktor auf die Ringfunktion ergeben würde. Durch diesen definierten Spalt kann also die Ringfeldwand ohne Behinderungen durch vorstehende Absätze oder dergleichen des Kolbenrohlings nahezu vollständig oder bis vollständig an den Anlagebereich an dem Kolbenrohling gewollt umgeformt werden. Der definierte Spalt bildet sich nach dem Umformen zwischen dem unteren Ende der Ringfeldwand und dem oberen zumindest teilweise, insbesondere vollständig umlaufenden oberen Rand des Kolbenschaftes. Im Falle eines nichtvollständig radial umlaufenden Kolbenschaftes kann das untere Ende der Ringfeldwand an einem korrespondierend geformten Anlagebereich des Kolbenrohlings nahezu vollständig oder vollständig zur Anlage kommen. Die Begriffe "untere" bzw. "obere" Kante sind dabei wieder mit Blick auf die Kolbenhubachse zu verstehen.

Im Folgenden wird die Erfindung anhand der Figur 1 beschrieben und näher erläutert.

Figur 1 zeigt einen Kühlkanalkolben 1, der einen Kolbenboden 2 aufweist. Der Kühlkanalkolben 1 kann, muss aber nicht eine Brennraummulde 3 aufweisen. Der schematisch in Figur 1 dargestellte Kühlkanalkolben 1 wird grundsätzlich nach dem Verfahren hergestellt, welches in den Figuren 1 bis 4 nebst zugehöriger Beschreibung der De 10 2004 031 513 A1 gezeigt und beschrieben ist. So ist zunächst ein Kragen, der absteht, vorhanden, wobei der Kragen umgeformt wird, so dass dadurch ein Kühlkanal 4 gebildet wird. Außerdem weist der Kühlkanalkolben 1, in diesem Stadium der Kolbenrohling, einen Kolbenschaft 5 sowie eine Bolzenbohrung 6, die beide zusammen das Unterteil des Kühlkanalkolbens 1 bilden, auf. Im Bereich des Kolbenbodens 2 wird von dem umgeformten Kragen eine Ringfeldwand 7 gebildet. Diese Ringfeldwand 7 ist vor oder nach dem Umformen des Kragens, vorzugsweise nach dem Umformen, mit einer entsprechenden Anzahl an Ringnuten (hier drei Ringnuten) versehen worden. Der Anlagebereich, an dem der Kragen, das heißt die spätere Ringfeldwand 7, an dem Kolbenrohling zur Anlage kommt, wird durch eine Kühlkanalunterwand 8 gebildet. Das heißt, dass eine Ringfeldwandinnenfläche 9 an dem radial umlaufenden Ende der Kühlkanalunterwand 8 vollständig oder sehr nah zur Anlage kommt. Dabei ist zwischen der oberen Kante des Kolbenschaftes 5 und der nach unten weisenden radial umlaufenden Kante der Ringfeldwand 7 ein Spalt X freigeblieben, um ein Aufstauchen der Ringfeldwand 7 zu vermeiden. Bei diesem Ausführungsbeispiel wird somit in vorteilhafterweise der Anlagebereich für die Ringfeldwand 7 von der Kühlkanalunterwand 8 des Kolbenrohlings gebildet.

Um den Anlagebereich der Ringfeldwandinnenfläche 9 an der Kühlkanalunterwand 8 zu vergrößern, wird die Kühlkanalunterwand 8 mit Herstellung des Kolbenrohlings mit einem in Richtung des Kühlkanales 4 weisenden Absatz 10 versehen. Dieser Absatz 10 hat noch einen besonderen Vorteil, auf den später eingegangen wird.

Weiterhin ist in Figur 1 (schraffiert dargestellt) ein Bereich 11 erkennbar, der nach dem Umformen der Ringfeldwand 7 entfernt wird. Diese Entfernung erfolgt in vorteilhafter Weise mittels eines spanabhebenden Verfahrens. Dabei sind folgende Einzelschritte oder Kombinationen denkbar, wobei der schraffierte Bereich 11 in Figur 1 das Ergebnis aller drei folgenden Möglichkeiten ist. Werden weniger als alle drei Möglichkeiten realisiert, sieht der Bereich 11 entsprechend anders, insbesondere kleiner aus.

So ist zum einen vorgesehen, dass nach dem Umformen des Kragens und Einnehmen der Ringfeldwand 7 in ihrer endgültigen Lage das in Richtung des Kolbenschaftes 5 weisende Ende der Ringfeldwand 7 entfernt wird um einen Teilbereich des Bereiches 11 zu realisieren. Durch diese Verkürzung der Länge der Ringfeldwand 7 wird durch diesen Einstich Material eingespart, um das Gewicht zu reduzieren. Ergänzend oder alternativ dazu wird die nach oben weisende Kante des Kolbenschaftes 5 entfernt. Dadurch lässt sich ebenfalls Gewicht einsparen, so dass ein Übergangsbereich 12, in dem der Kolbenboden 2 in das Unterteil des Kühlkanalkolbens 1 übergeht, eine Schaftanbindung 13 bildet. Diese Schaftanbindung 13 weist durch Entfernung der nach oben weisenden Kante des Kolbenschaftes 5 eine erforderliche Mindeststärke auf, wobei diese Mindeststärke so gewählt ist, dass einerseits die ausreichende Festigkeit zur Verhinderung von Verformungen gegeben ist und andererseits Material durch Entfernen des Bereiches 11 zwecks Gewichtsersparnis entfernt werden kann.

Ebenfalls ergänzend oder ebenfalls alternativ wird in einem Bereich der Schaftanbindung 13 ein Teil des Kolbenrohlings entfernt. Das bedeutet, dass in dem Kolbenrohling nicht nur oberhalb des Kolbenschaftes 5, sondern auch nach innen (in Richtung der Bolzenbohrung 6) weisend Material entfernt wird, um weiter Gewicht des Kühlkanalkolbens 1 einzusparen bei gleichzeitiger Realisierung der erforderlichen Festigkeit. Wird nach innen weisend im Bereich der Schaftanbindung 13 Material des Kolbenrohlings weggenommen, ist der Absatz 10 von besonderem Vorteil, da die Kühlkanalunterwand 8 relativ dünn ausgebildet ist und der Anlagebereich der Ringfeldwandinnenfläche 9 an dem Anlagebereich durch den Absatz 10 vergrößert wird. Dies gilt im Übrigen auch für den Zeitpunkt, bei dem der Kragen umgeformt wird, so dass die Ringfeldwand 7 gebildet wird und mit ihrer Ringfeldwandinnenfläche 8 an dem Anlagebereich zur Anlage kommt, bevor der Bereich 11 entfernt wurde. Durch diesen Absatz 10, der in Richtung des Kühlkanales 4 weist, wird insgesamt die radial umlaufende zur Verfügung stehende Anlagefläche für die Ringfeldwandinnenfläche 9 vergrößert.

Der nach dem Umformen des Kragens entstehende Spalt X wird durch Aussparung des Bereiches 11 so vergrößert, dass nach dem Aussparen zwischen der Unterkante der Ringfeldwand 7 und der oberen Kante des Kolbenschaftes 5 der Spalt auf ein Maß b vergrößert wird. Außerdem reicht der Bereich 11 über die Dicke der Ringfeldwand 7 und/oder der Dicke des Kolbenschaftes 5 in Richtung der Kolbenhubachse hinein, muss es aber nicht. Bei der Auslegung des Kragens und damit der späteren Ringfeldwand 7 ist darauf zu achten, dass das äußere Maß des umzuformenden Kragens des Kolbenrohlings und die Lage der oberen Kante des Kolbenschaftes 5 so gewählt sind, dass immer nach dem Umformen ein definierter Spalt X entsteht. Das bedeutet, dass dieser Spalt X mindestens immer so groß sein muss, dass er prozesssicher immer als Spalt entsteht (folglich nicht an dem Kolbenschaft zur Anlage kommt), dass also die Ringfeldwand beim Umformvorgang (Klappvorgang) unter keinen Umständen gestaucht wird oder sonst zu dem Kolbenrohling Kontakt bekommt (außer den radial umlaufenden Kontakt gegen das radial umlaufende Ende der Kühlkanalunterwand 8).

Insgesamt lassen sich mit dem erfindungsgemäßen Verfahren Gewichtsreduzierung, Ringfeldfunktionsverbesserung und Kosteneinsparung erzielen. Durch die Gewichtsreduzierung reduzieren sich auch die Triebwerkskräfte, es vermindert sich die Reibung und es wird Material eingespart. Hinsichtlich der Kostenreduzierung ist die Einsparung von Arbeitsgängen, insbesondere eines Schweißvorganges, zu nennen. Die Funktionsverbesserung ist darin zu sehen, dass die Ringfeldverformung in vorteilhafter Weise unterbleibt.

Bezüglich der Schweißvorgänge sei noch darauf hingewiesen, dass die Ringfeldwand 7, insbesondere der Ringfeldinnenwandinnenfläche 9, mit dem umlaufenden Ende der Kühlkanalunterwand 8 bzw. des Absatzes 10 durch einen Schweißvorgang verbunden werden kann. Da dies zwar möglich ist, aber einen zusätzlichen Arbeitsgang erfordert (nämlich Schweißen), wird in besonders vorteilhafter Weise der Umformvorgang des Kragens so ausgelegt, dass die Ringfeldwandinnenfläche 9 so nahe wie möglich oder sogar vollständig an dem umlaufenden Ende der Kühlkanalunterwand 8 bzw. des Absatzes 10 zur Anlage kommt. Sollte radial umlaufend oder auch nur teilweise radial umlaufend dort ein Spalt verbleiben, ist dieser so klein, dass dadurch die Funktion des Kühlkanales 4 nicht beeinträchtigt wird. Der Vollständigkeit halber wird noch darauf verwiesen, dass zwischen dem Innenbereich des Kühlkanalkolbens 1 und dem Kühlkanal 4 zumindest eine Öffnung oder zwei Öffnungen, z. B. im Übergangsbereich 12, eingebracht wird oder werden, um einen Austausch des Kühlmediums in dem Kühlkanal 4 in an sich bekannter Weise zu gewährleisten.

### Bezugszeichenliste

- 1.: Kühlkanalkolben
- 2.: Kolbenboden
- 3.: Brennraummulde
- 4.: Kühlkanal
- 5.: Kolbenschaft
- 6.: Bolzenbohrung
- 7.: Ringfeldwand
- 8.: Kühlkanalunterwand
- 9.: Ringfeldwandinnenfläche
- 10.: Absatz
- 11.: Entfernter Bereich
- 12.: Übergangsbereich
- 13.: Schaftanbindung

## Patentansprüche

1. Verfahren zur Herstellung eines Kühlkanalkolbens (1) für eine Brennkraftmaschine, der in seinem Kolbenboden (2) einen Kühlkanal (4) aufweist, wobei sich den Kolbenboden (2) ein Kolbenunterteil mit Kolbennaben, Bolzenbohrungen (6) und Kolbenschäften (5) anschließt, wobei zunächst ein Kolbenrohling mit einem im Bereich des Kolbenbodens (2) radial abstehenden und umlaufenden Kragen hergestellt wird, wobei der eine spätere Ringfeldwand (7) bildende Kragen anschließend umgeformt wird und in einem Übergangsbereich (12) zwischen dem Kolbenboden (2) und dem Kolbenunterteil ein Anlagebereich für den Kragen geformt wird und der Kragen derart umgeformt wird, bis dessen äußere radial umlaufende Kante sehr nah oder vollständig zur Anlage an dem Anlagebereich kommt, um einen geschlossenen Kühlkanal (4) zu bilden, **dadurch gekennzeichnet, dass** das äußere Maß des umzuformenden Kragens des Kolbenrohlings und die Lage der Oberkante des Kolbenschaftes so gewählt sind, dass der Endbereich der Ringfeldwand (7) nach dem Umformen einen definierten Spalt (X) zu der Oberkante des Kolbenschaftes (5) bildet.

2. Verfahren zur Herstellung eines Kühlkanalkolbens (1) nach Anspruch 1, **dadurch gekennzeichnet, dass** der Anlagebereich für die Ringfeldwand (7) von einer Kühlkanalunterwand (8) des Kolbenrohlings gebildet wird.

3. Verfahren zur Herstellung eines Kühlkanalkolbens (1) nach Anspruch 1 oder 2, **dadurch gekennzeichnet, dass** die Kühlkanalunterwand (8) mit Herstellung des Kolbenrohlings mit einem in Richtung des Kühlkanales (4) weisenden Absatz (10) versehen wird.

4. Verfahren zur Herstellung eines Kühlkanalkolbens (1) nach einem der vorhergehenden Ansprüche, **dadurch gekennzeichnet, dass** nach dem Umformen des Kragens das in Richtung des Kolbenschaftes (5) weisende Ende der Ringfeldwand (7) entfernt wird.

5. Verfahren zur Herstellung eines Kühlkanalkolbens (1) nach einem der vorhergehenden Ansprüche, **dadurch gekennzeichnet, dass** nach dem Umformen des Kragens die nach oben weisende Kante des Kolbenschaftes (5) entfernt wird.

6. Verfahren zur Herstellung eines Kühlkanalkolbens (1) nach einem der vorhergehenden Ansprüche, **dadurch gekennzeichnet, dass** nach dem Umformen des Kragens in einem Bereich einer Schaftanbindung (13) ein Teil des Kolbenrohlings entfernt wird.

## Claims

1. Method for producing a cooling channel piston (1) for an internal combustion engine, which cooling channel piston has a cooling channel (4) in its piston head (2), wherein the piston head (2) is adjoined by a piston lower part with piston hubs, bolt bores (6) and piston shafts (5), wherein first of all a piston blank having an encircling collar which protrudes radially in the region of the piston head (2) is produced, wherein the collar, which forms a subsequent annular field wall (7), is subsequently reshaped, and a contact region for the collar is formed in a transition region (12) between the piston head (2) and the piston lower part, and the collar is reshaped until its outer, radially encircling edge comes very close or completely into contact with the contact region in order to form a closed cooling channel (4), **characterized in that** the outer extent of the collar, which is to be reshaped, of the piston blank and the position of the upper edge of the piston shaft are selected in such a manner that, after the reshaping, the end region of the annular field wall (7) forms a defined gap (X) with respect to the upper edge of the piston shaft (5).

2. Method for producing a cooling channel piston (1) according to claim 1, **characterized in that** the contact region for the annular field wall (7) is formed by a cooling channel lower wall (8) of the piston blank.

3. Method for producing a cooling channel piston (1) according to claim 1 or 2, **characterized in that** the cooling channel lower wall (8), with production of the piston blank, is provided with a step (10) facing in the direction of the cooling channel (4).

4. Method for producing a cooling channel piston (1) according to one of the preceding claims, **characterized in that**, after the reshaping of the collar, that end of the annular field wall (7) which faces in the direction of the piston shaft (5) is removed.

5. Method for producing a cooling channel piston (1) according to one of the preceding claims, **characterized in that**, after the reshaping of the collar, the upwardly facing edge of the piston shaft (5) is removed.

6. Method for producing a cooling channel piston (1) according to one of the preceding claims, **characterized in that**, after the reshaping of the collar, part of the piston blank is removed in a region of a shaft connection (13).

## Revendications

1. Procédé de fabrication d'un piston à canal de refroidissement (1) pour un moteur à combustion interne, qui présente dans son fond de piston (2) un canal de refroidissement (4), une partie inférieure de piston avec un moyeu de piston, des alésages de boulon (6) et des tiges de piston (5) se raccordant au fond de piston (2), une ébauche de piston étant d'abord fabriquée avec un col périphérique saillant radialement dans la région du fond de piston (2), le col, formant une paroi de champ annulaire ultérieure (7), étant ensuite façonné et, dans une région de transition (12) entre le fond de piston (2) et la partie inférieure de piston, une région d'appui pour le col étant formée et le col étant façonné jusqu'à ce que son arête périphérique radialement extérieure vienne en appui complètement contre, ou se rapproche très étroitement de la région d'appui afin de former un canal de refroidissement fermé (4), **caractérisé en ce que** la dimension extérieure du col à façonner de l'ébauche de piston et la position de l'arête supérieure de la tige de piston sont choisies de telle sorte que la région d'extrémité de la paroi de champ annulaire (7) forme, après le façonnage, une fente définie (X) avec l'arête supérieure de la tige de piston (5).

2. Procédé de fabrication d'un piston de canal de refroidissement (1) selon la revendication 1, **caractérisé en ce que** la région d'appui pour la paroi de champ annulaire (7) est formée par une paroi inférieure de canal de refroidissement (8) de l'ébauche de piston.

3. Procédé de fabrication d'un piston de canal de refroidissement (1) selon la revendication 1 ou 2, **caractérisé en ce que** la paroi inférieure de canal de refroidissement (8) est pourvue, avec la fabrication de l'ébauche de piston, d'un épaulement (10) tourné dans la direction du canal de refroidissement (4).

4. Procédé de fabrication d'un piston de canal de refroidissement (1) selon l'une quelconque des revendications précédentes, **caractérisé en ce qu'**après le façonnage du col, l'extrémité de la paroi de champ annulaire (7) tournée dans la direction de la tige de piston (5) est enlevée.

5. Procédé de fabrication d'un piston de canal de refroidissement (1) selon l'une quelconque des revendications précédentes, **caractérisé en ce qu'**après le façonnage du col, l'arête de la tige de piston (5) tournée vers le haut est enlevée.

6. Procédé de fabrication d'un piston de canal de refroidissement (1) selon l'une quelconque des revendications précédentes, **caractérisé en ce qu'**après le façonnage du col dans une région d'une liaison de tige (13) une partie de l'ébauche de piston est enlevée.
